# EUROPEAN PATENT SPECIFICATION

(11) **EP 2 911 051 B1**
(45) Date of publication and mention of the grant of the patent: **08.05.2019**
(21) Application number: 15156089.3
(22) Date of filing: 23.02.2015
(51) Int. Cl.: G06F 3/0488

(54) **Input method and device**
Eingabeverfahren und Vorrichtung
Procédé et dispositif d'entrée

(30) Priority: 22.02.2014 CN 201410063114
(43) Date of publication of application: 26.08.2015
(73) Proprietor: Xiaomi Inc., Beijing 100085 (CN)
(72) Inventor: Zhang, Xu, 100085 Beijing (CN)
(74) Representative: Sackin, Robert

(56) References cited:
- EP-A1- 2 634 672
- JP-A- H10 232 735
- JP-A- 2012 113 745
- US-A- 5 856 824
- US-A1- 2005 122 313
- US-A1- 2009 237 361
- US-A1- 2013 241 837

## Description

### TECHNICAL FIELD

The present disclosure relates to the field of computer technology, and more particularly, to an input method and device.

### BACKGROUND

With rapid development of touch screen technology, the touch screen has become one of Human-Computer interaction commonly used in electronic devices such as smart phones, tablet PCs or e-readers.

During using of electronic devices, users often input text into electronic devices through touch screen. For example, an electronic device displays a pre-set virtual keyboard including key positions for each character in a full physical keyboard. The electronic device receives a click signal produced by a user's click on a certain key position, and after the click signal is received, a target character corresponding to the key position clicked by the user is inputted.

During the procedure of devising the present disclosure, the inventor has found that at least the following defects exist in related technologies.

Because the virtual keyboard cannot provide the user with a feedback prompting the finger's positioning as a physical keyboard does, so the user cannot realize that location of the user's fingers is wrong, when the placement position of the user's hands on the virtual keyboard deviates from that in normal use, such that when the user performs touch-type, target characters inputted to a terminal can not be the characters that the user intends to input, so the input accuracy of the above input method is low; moreover, in order to avoid inputting errors in actual realization, the user has to view the virtual keyboard all the time, so the input speed of the above input method is slow.

US patent application with publication no. US 2013/0241837 discloses an input apparatus having a touch sensor and a recognition means which detects that the finger that the touch sensor has detected has touched the touch sensor and recognizes the position information of the finger, and a control means which sets a virtual keyboard based on the position information.

Japanese patent application with publication no. JP-H10232735 discloses a display device and a touch panel in which the arrangement of keys displayed on the display device exists within the movable range of fingers of a user and the keys are arranged corresponding to the action of bending the fingers.

US patent no. US 5,856,824 discloses a method to create a reshapable pointing device on a touch screen in accordance with the size of a finger.

US patent application with publication no. US 2005/122313 discloses a computer keyboard configuring method for treating trauma disorder, involves defining set of homekey positions for user on sensing surface of keyboard, and defining set of non-homekey positions on sensing surface .The method involves defining a set of homekey positions for a user on a sensing surface of a computer keyboard. The user's hands are placed in a preferred position for the user on the sensing surface. A location of each of the user's typing fingers is detected. A set of non-homekey positions is defined on the sensing surface, where non-homekey positions are calculated and located relative to the homekey positions.

### SUMMARY

In order to solve the problem in the related art that the accuracy of inputting is low and the input speed is slow, the embodiments of the present disclosure provide an input method and device.

Aspects of the present invention are defined by the independent claims. Preferred features are defined by the dependent claims.

The technical solutions provided by embodiments of the present disclosure can achieve the following advantageous effects.

After a click signal is received, the present disclosure determines a touch position of a target finger based on the click signal, determines a target key position corresponding to the target finger at the touch position based on a displacement between an initial position and the touch position of the target finger, a basic key position of a basic key corresponding to the target finger at the initial position, and a relative position on the touch screen of the basic key position and other key positions of other keys corresponding to the target finger, and thereby inputs a target character corresponding to the target key position; so as to solve the problem in the related art that the input accuracy is low and the input speed is slow, and achieve the following effects: even if the placement position of the user's hands deviates from that in the user's normal use, since the target key position is determined based on the displacement between the initial position and the touch position of the target finger, the electronic apparatus still can input the user's desired character accurately, such that the input accuracy can be improved; meanwhile, since the target key position is determined based on the displacement between the initial position and the touch position of the target finger, the user can conduct inputting on the touch screen according to his own touch-type habit in the physical keyboard, without viewing the virtual keyboard on the touch screen, and thus achieving the effect of improving the input speed.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flowchart showing an input method according to an exemplary embodiment.
Fig. 2A is a flowchart showing an input method according to another exemplary embodiment.
Fig. 2B is a placement diagram showing a placement manner of a palm when obtaining natural position relationships, according to another exemplary embodiment.
Fig. 2C is a diagram showing the natural position relationships obtained by an electronic apparatus, according to another exemplary embodiment.
Fig. 2D is a diagram showing that the electronic apparatus obtains fingerprint of a finger, according to another exemplary embodiment.
Fig. 2E is a placement diagram showing a placement manner of a palm when the electronic apparatus obtains limit position relationships, according to another exemplary embodiment.
Fig. 2F is a diagram showing corresponding relationships between various fingers and default characters when the palm touches the touch screen in a natural and comfortable state, according to another exemplary embodiment.
Fig. 2G is a diagram showing a preset ordering among various key positions corresponding to a finger, according to another exemplary embodiment.
Fig. 2H is another flowchart showing an input method according to another exemplary embodiment.
Fig. 3 is a diagram showing an input device according to an exemplary embodiment.
Fig. 4A is a diagram showing an input device according to another exemplary embodiment.
Fig. 4B is a diagram showing an initial position inquiring unit according to another exemplary embodiment.
Fig. 5 is a diagram showing an input device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

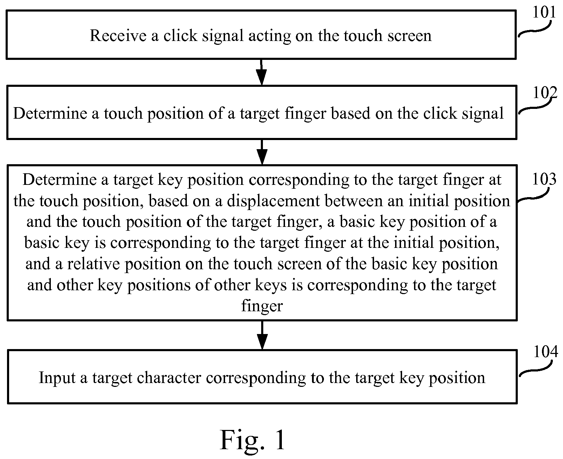

Fig. 1 is a flowchart showing an input method according to an exemplary embodiment. As shown in Fig. 1, the input method can be applied in an electronic device including a touch screen, and the input method includes the following steps.

In step 101, an electronic device receives one or more click signals acting on the touch screen.

In step 102, an electronic device determines a touch position of a target finger based on the click signals.

In step 103, an electronic device determines a target key position corresponding to the target finger at the touch position based on a displacement between an initial position and the touch position of the target finger, a basic key position of a basic key corresponding to the target finger at the initial position, and a relative position on the touch screen of the basic key position and other key positions of other keys corresponding to the target finger.

In step 104, an electronic device inputs a target character corresponding to the target key position.

After a click signal is received, the input method provided by the present embodiment determines a touch position of a target finger based on the click signal, determines a target key position corresponding to the target finger at the touch position based on a displacement between an initial position and the touch position of the target finger, a basic key position of a basic key corresponding to the target finger at the initial position, and a relative position on the touch screen of the basic key position and other key positions of other keys corresponding to the target finger, and thus inputs a target character corresponding to the target key position; so as to solve the problem in the related art that the accuracy of inputting is low and the input speed is slow, and achieve the following effects. Even if the location of the user's fingers deviates from that in the user's normal use, since the target key position is determined based on the displacement between the initial position and the touch position of the target finger, the electronic device still can input the user's desired character accurately, such that the input accuracy can be improved; meanwhile, since the target key position is determined based on the displacement between the initial position and the touch position of the target finger, the user can conduct inputting on the touch screen according to his own touch-type habit in the physical keyboard, without viewing the virtual keyboard on the touch screen, and thus achieving the effect of improving the input speed.

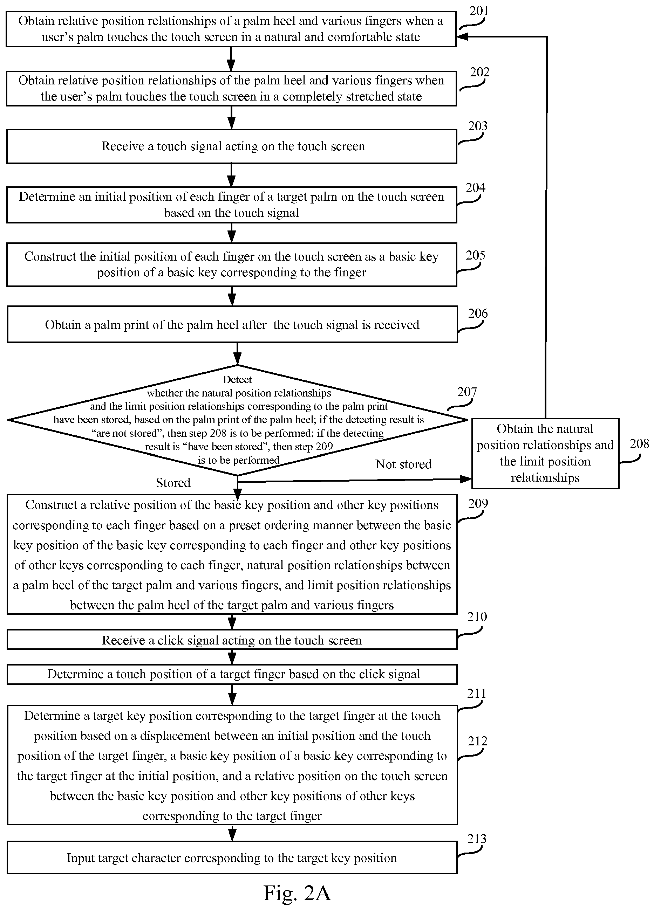

Fig. 2A is a flowchart showing an input method according to another exemplary embodiment. As shown in Fig. 2A, the input method can be applied in an electronic device including a touch screen, and the input method includes the following steps.

In step 201, relative position relationships of a palm heel or heel of a hand and different fingers when a user's palm touches the touch screen in a natural and comfortable state are obtained.

When a user inputs on an electronic device for the first time, in order to perform subsequent steps, the electronic device obtains the relative position relationships between a palm heel and different fingers that the user's palm touches the touch screen in a natural and comfortable state.

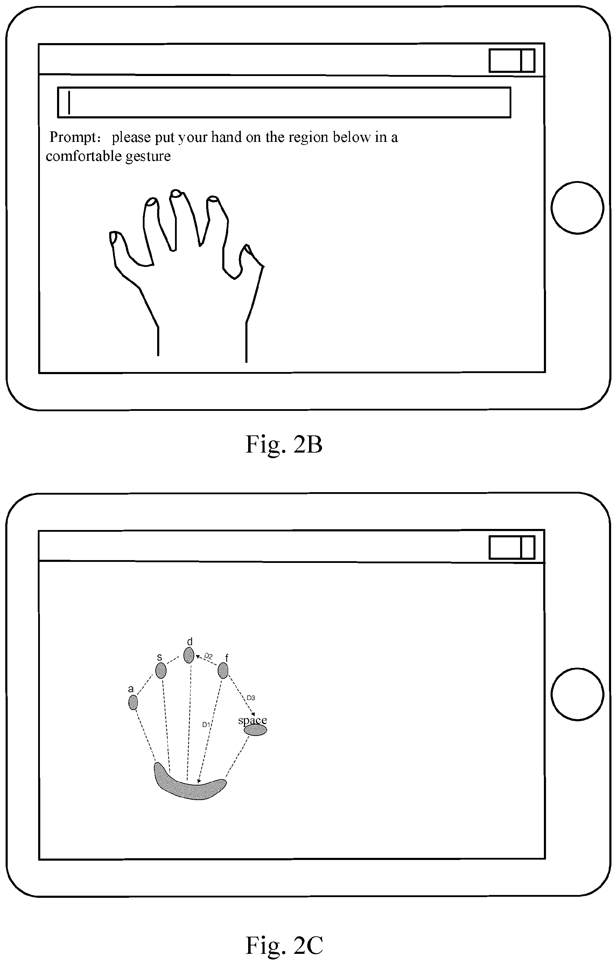

For example, when a user requests inputting on an electronic device for the first time, the electronic device displays a display interface for prompting the user to touch the touch screen by his palm in a natural and comfortable state; after viewing the display interface displayed by the electronic device, the user uses his palm to touch the touch screen in a natural and comfortable state shown in Fig. 2B; at this time, the electronic device can correspondingly receive a touch signal produced when the user's palm touches the touch screen in the natural and comfortable state. The touch signal includes signals applied respectively by a palm heel of the user's palm and five fingers of the palm. After the touch signal is received, the electronic device determines relative position relationships among receipt positions of respective signals in the touch signal as relative position relationships among the palm heel and five fingers of the palm, for details of which please refer to Fig. 2C.

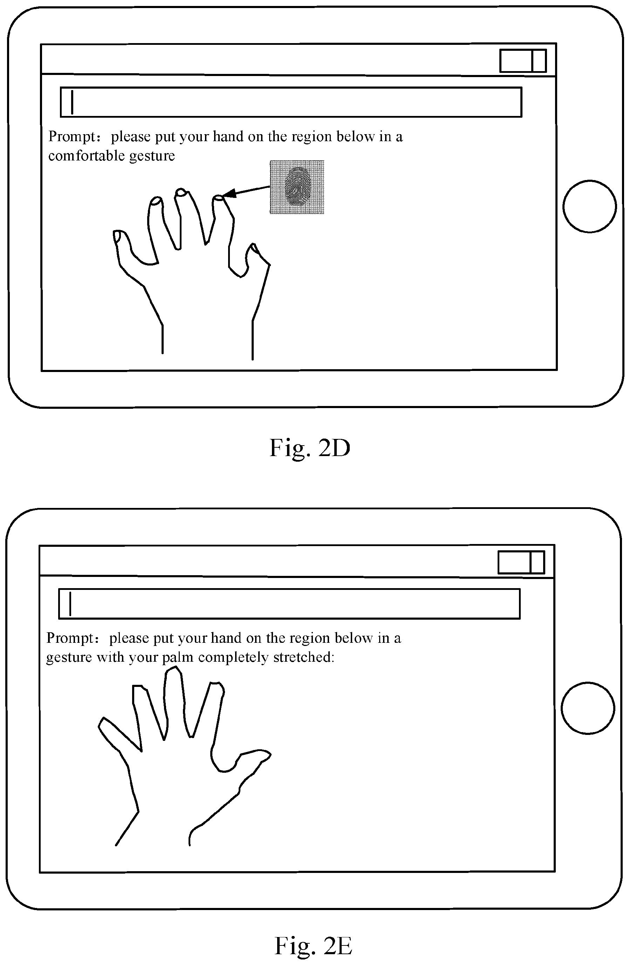

In order to distinguish the relative position relationships between the palm heel or heel of a hand and different fingers when different users use their hands to touch the touch screen in the natural and comfortable state, the electronic device can obtain a palm print of the palm heel and fingerprints of each of the fingers, so as to mark the palm heel by using the obtained palm print and to mark different fingers by using the obtained fingerprints. In actual implementation, when the electronic device obtains the palm print of the palm heel, because the outermost layer of the palm skin, i.e., the layer of the palm print is nonconductive, while the subcutaneous layer inside the palm is conductive, so when the user's palm falls onto the touch screen of the electronic device, the electronic device can detect lines of the palm print by supplying electricity to the palm skin, so as to obtain the palm print of the palm heel by measuring a tiny change in conductivity caused by the palm print, which will not be redundantly described in this embodiment. Similarly, the electronic device can use the same obtaining method to obtain fingerprints of each of the fingers; for example, the electronic device can obtain the fingerprint of the finger as shown in Fig. 2D.

In step 202, relative position relationships between the palm heel and different fingers when the user's palm touches the touch screen in a completely stretched state are obtained.

Similarly, when a user requests inputting on an electronic device for the first time, in order to perform subsequent steps, the electronic device can obtain the relative position relationships between the palm heel and different fingers when the user's palm touches the touch screen in a completely stretched state.

For example, the electronic device can use an obtaining method similar to that in the step 201 to obtain the relative position relationships between the palm heel and different fingers when the user's palm touches the touch screen in a completely stretched state. What is different from the step 201 is that the user uses his palm to touch the touch screen in a completely stretched state, for the detailed diagram of which please refer to Fig. 2E.

It is to be noted that the present embodiment is exemplified by firstly performing the step 201 and then performing the step 202. In actual implementation, the electronic device can perform the step 201 and the step 202 simultaneously, or firstly perform the step 202 and then perform the step 201, the specific performing sequence of which is not limited by the present embodiment.

In step 203, a touch signal acting on the touch screen is received.

When the user needs to request inputting in the electronic device, the user can put his palm on the touch screen of the electronic device, and then realize inputting by clicking on the touch screen with a finger, so the electronic device can correspondingly receive the touch signal acting on the touch screen by the palm.

In step 204, an initial position of each finger of a target palm on the touch screen is determined based on the touch signal.

After the touch signal is received, the electronic device can determine an initial position of each finger of the user's palm on the touch screen based on the touch signal, that is, the electronic device can determine an initial position of each finger of a target palm on the touch screen based on the touch signal. The target palm is a palm to which a target finger clicking the touch screen belongs; for example, when the user clicks the touch screen by using a finger of his left hand, the target palm is the left palm; when the user clicks the touch screen by using a finger of his right hand, the target palm is the right palm.

For example, the electronic device determines an initial position of each finger of the target palm on the touch screen based on the touch signal by any one of the following manners.

In first manner, if a palm print is used to mark the palm heel and fingerprints are used to mark different fingers in natural position relationships, a palm print of the palm heel is obtained based on the touch signal and a start position of the palm print on the touch screen is determined, the natural position relationships corresponding to the palm print are obtained, and the initial position of each finger on the touch screen is determined based on the start position of the palm print on the touch screen and the natural position relationships.

If a palm print is used to mark the palm heel and fingerprints are used to mark different fingers in natural position relationships, after the touch signal is received, the electronic device can obtain the palm print of the palm heel, and serve a touch position of the palm heel upon receiving the touch signal as the start position corresponding to the palm heel on the touch screen. Because when the user's palm is placed naturally, the relative positions of the palm heel and each of the fingers of the same user's palm are substantially invariable, so after obtaining the palm print of the palm heel and the start position corresponding to the palm heel on the touch screen, the electronic device can obtain the natural position relationships corresponding to the palm print, and thus determine the initial position of each finger on the touch screen by inquiring the natural position relationships. The natural position relationships are relative position relationships between the palm heel and different fingers when the target palm touches the touch screen in a natural and comfortable state.

In second manner that does not form part of the claimed invention, if fingerprints are used to mark different fingers in natural position relationships and/or limit position relationships, different fingerprints are obtained based on the touch signal after the touch signal is received; each finger is identified based on the different fingerprints, and the initial position of each finger on the touch screen is determined based on a position of each fingerprint in the touch signal.

If fingerprints are used to mark different fingers in the natural position relationships, the limit position relationships or both, e.g., fingerprints are used to mark different fingers in the natural position relationships, after the touch signal is received, the electronic device can obtain fingerprints of different fingers which apply the touch signal and the position of each fingerprint, identify different fingers based on the obtained fingerprints and the fingerprints in the natural position relationships, and thus determine the position of each fingerprint as the position of each finger on the touch screen.

In step 205, the initial position of each finger on the touch screen is constructed as a basic key position of a basic key corresponding to the finger.

After determining the initial position of each finger of the target palm, the electronic device can construct the initial position of each finger as a basic key position of a basic key corresponding to each finger. The basic key corresponding to each finger is the key of default character corresponding to each finger of the palm when the user's palm touches the touch screen in a natural and comfortable state.

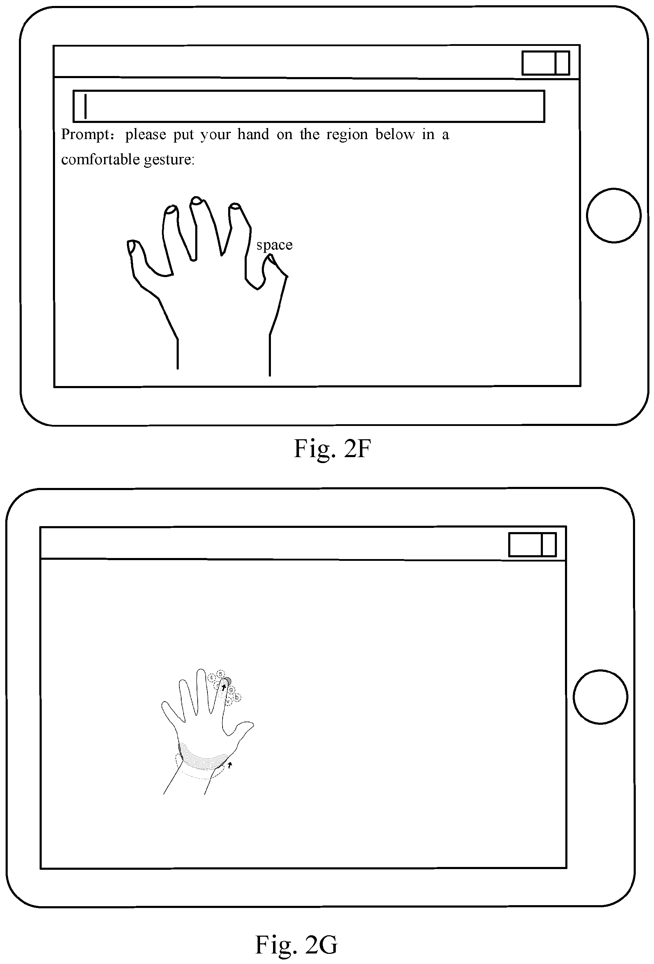

In actual implementation, similarly to the case where the user conducts inputting on a physical keyboard, when the user's palm touches the touch screen in a natural and comfortable state, fingers of the user's left hand sequentially correspond to basic keys 'A', 'S', 'D', 'F' and 'space' from the little finger to the thumb, and fingers of the user's right hand sequentially correspond to basic keys ':', 'L', 'K', 'J' and 'space' from the little finger to the thumb, so after determining the initial position of each finger, the electronic device can construct the initial position of each finger as a basic key position of a basic key corresponding to each finger. For example, the initial position of the little finger of left hand on the touch screen is constructed as the basic key position of 'A' on the touch screen, and the initial position of the ring finger of left hand on the touch screen is constructed as the basic key position of'S' on the touch screen, for details of which please refer to Fig. 2F.

Additionally, in actual implementation, the user can select a key for each finger via setting options, and thus construct the initial position of the finger as the key position of the user-selected key on the touch screen, the specific constructing manner of which is not limited by the present embodiment.

In step 206, a palm print of the palm heel is obtained after receiving the touch signal.

After the touch signal is received by the electronic device, when a palm print is used to mark the palm heel in the natural position relationships and the limit position relationships, in order to perform subsequent steps, the electronic device can obtain a palm print of the palm heel of the target palm.

It is to be noted that the present embodiment is exemplified by performing the step 206 after the step 204. In actual implementation, the electronic device can perform the step 206 and the step 204 simultaneously, or firstly perform the step 206 and then perform the step 204, the specific performing sequence of which is not limited by the present embodiment.

In step 203, a touch signal acting on the touch screen is received.

When the user needs to request inputting in the electronic device, the user can put his palm on the touch screen of the electronic device, and then realize inputting by clicking on the touch screen with a finger, so the electronic device can correspondingly receive the touch signal acting on the touch screen by the palm.

In step 204, an initial position of each finger of a target palm on the touch screen is determined based on the touch signal.

After receiving the touch signal, the electronic device can determine an initial position of each finger of the user's palm on the touch screen based on the touch signal, that is, the electronic device can determine an initial position of each finger of a target palm on the touch screen based on the touch signal. The target palm is a palm to which a target finger clicking the touch screen belongs; for example, when the user clicks the touch screen by using a finger of his left hand, the target palm is the left palm; when the user clicks the touch screen by using a finger of his right hand, the target palm is the right palm.

In actual implementation, the electronic device determines an initial position of each finger of the target palm on the touch screen based on the touch signal by any one of the following manners.

A first manner: if a palm print is used to mark the palm heel and fingerprints are used to mark different fingers in natural position relationships, a palm print of the palm heel is obtained based on the touch signal and a start position of the palm print on the touch screen is determined; the natural position relationships corresponding to the palm print are obtained; and the initial position of each finger on the touch screen is determined based on the start position of the palm print on the touch screen and the natural position relationships;

If a palm print is used to mark the palm heel and fingerprints are used to mark different fingers in natural position relationships, after receiving the touch signal, the electronic device can obtain the palm print of the palm heel, and serve a touch position of the palm heel upon receiving the touch signal as the start position corresponding to the palm heel on the touch screen. Because when the user's palm is placed naturally, the relative positions between the palm heel and each of the fingers of the same user's palm are substantially invariable, so after obtaining the palm print of the palm heel and the start position corresponding to the palm heel on the touch screen, the electronic device can obtain the natural position relationships corresponding to the palm print, and thus determine the initial position of each finger on the touch screen by inquiring the natural position relationships. The natural position relationships are relative position relationships between the palm heel and different fingers when the target palm touches the touch screen in a natural and comfortable state.

A second manner that does not form part of the claimed invention: if fingerprints are used to mark different fingers in natural position relationships and/or limit position relationships, different fingerprints are obtained based on the touch signal after the touch signal is received; each finger is identified based on the different fingerprints, and the initial position of each finger on the touch screen is determined based on a position of each fingerprint in the touch signal.

If fingerprints are used to mark different fingers in the natural position relationships, the limit position relationships or both, e.g., fingerprints are used to mark different fingers in the natural position relationships, after the touch signal is reeived, the electronic device can obtain fingerprints of different fingers which apply the touch signal and the position of each fingerprint, identify different fingers based on the obtained fingerprints and the fingerprints in the natural position relationships, and thus determine the position of each fingerprint as the position of each finger on the touch screen.

In step 205, the initial position of each finger on the touch screen is constructed as a basic key position of a basic key corresponding to the finger.

After determining the initial position of each finger of the target palm, the electronic device can construct the initial position of each finger as a basic key position of a basic key corresponding to each finger. The basic key corresponding to each finger is the key of default character corresponding to each finger of the palm when the user's palm touches the touch screen in a natural and comfortable state.

In actual implementation, similarly to the case where the user conducts inputting on a physical keyboard, when the user's palm touches the touch screen in a natural and comfortable state, fingers of the user's left hand sequentially correspond to basic keys 'A', 'S', 'D', 'F' and 'space' from the little finger to the thumb, and fingers of the user's right hand sequentially correspond to basic keys 'L', 'K', 'J' and 'space' from the little finger to the thumb, so after determining the initial position of each finger, the electronic device can construct the initial position of each finger as a basic key position of a basic key corresponding to each finger. For example, the initial position of the little finger of left hand on the touch screen is constructed as the basic key position of 'A' on the touch screen, and the initial position of the ring finger of left hand on the touch screen is constructed as the basic key position of 'S' on the touch screen, for details of which please refer to Fig. 2F.

Additionally, in actual implementation, the user can select a key for each finger via setting options, and thus construct the initial position of the finger as the key position of the user-selected key on the touch screen, the specific constructing manner of which is not limited by the present embodiment.

In step 206, a palm print of the palm heel is obtained after the touch signal is received.

After the touch signal is received by the electronic device, when a palm print is used to mark the palm heel in the natural position relationships and the limit position relationships, in order to perform subsequent steps, the electronic device can obtain a palm print of the palm heel of the target palm.

It is to be noted that the present embodiment is exemplified by performing the step 206 after the step 204. In actual implementation, the electronic device can perform the step 206 and the step 204 simultaneously, or firstly perform the step 206 and then perform the step 204, the specific performing sequence of which is not limited by the present embodiment.

In step 207, whether the natural position relationships and the limit position relationships corresponding to the palm print have been stored is detected based on the palm print of the palm heel; if the detecting result is "are not stored", then step 208 is to be performed; if the detecting result is "have been stored", then step 209 is to be performed;

After obtaining the palm print of the palm heel, the electronic device can detect, based on the palm print of the palm heel, whether the natural position relationships and the limit position relationships have been stored in the electronic device. The natural position relationships are relative position relationships between the palm heel and different fingers when the target palm touches the touch screen in a natural and comfortable state; the limit position relationships are relative position relationships between the palm heel and different fingers when the target palm touches the touch screen in a completely stretched state.

In actual implementation, because the relative position relationships between the palm heel and different fingers when the palm touches the touch screen in a natural and comfortable state as well as the relative position relationships between the palm heel and different fingers when the palm touches the touch screen in a completely stretched state are different for different users, and a method for distinguishing different users is to distinguish them by the users' palm prints, so after obtaining the palm print of the palm heel, the electronic device can detect whether the relative position relationships between the palm heel and different fingers when the user's palm touches the touch screen in a natural and comfortable state as well as the relative position relationships between the palm heel and different fingers when the palm touches the touch screen in a completely stretched state, which match with the obtained palm print of the palm heel, have been stored.

In step 208, the natural position relationships and the limit position relationships are obtained.

If the electronic device's detecting result is that the natural position relationships and the limit position relationships are not stored, it is indicated that the user conducts inputting on the electronic device for the first time, thus, at this time, the electronic device can obtain the natural position relationships and the limit position relationships. The electronic device obtains the natural position relationships by the steps.

First, a first touch signal acting on a first interface is received, the first interface being configured to prompt the user to touch the touch screen by the target palm in a natural and comfortable state.

When the electronic device detects that the natural position relationships and the limit position relationships are not stored, the electronic device can display the first interface, which is configured to prompt the user to touch the touch screen by the target palm in a natural and comfortable state.

Second, relative position relationships between the palm heel and different fingers when the target palm touches the touch screen in the natural and comfortable state are determined based on the first touch signal, and the relative position relationships determined based on the first touch signal are served as the natural position relationships.

After receiving the first touch signal, the electronic device determines, based on the first touch signal, relative position relationships between the palm heel and different fingers when the target palm touches the touch screen in the natural and comfortable state, and serves the relative position relationships determined based on the first touch signal as the natural position relationships.

It is to be noted that the electronic device obtains the natural position relationships in an obtaining manner similar to that for the electronic device to obtain the position relationships between the palm heel and different fingers when the user's palm touches the touch screen in the natural and comfortable state in the step 201, for the technical details please refer to the step 201, which will not be redundantly described here.

The electronic device obtains the limit position relationships by the steps.

First, a second touch signal acting on a second interface is received, the second interface being configured to prompt the user to touch the touch screen by the target palm in a completely stretched state.

When the electronic device detects that the natural position relationships and the limit position relationships are not stored, the electronic device can display the second interface, which is configured to prompt the user to touch the touch screen by the target palm in a completely stretched state.

Second, relative position relationships between the palm heel and different fingers when the target palm touches the touch screen in the completely stretched state are determined based on the second touch signal, and the relative position relationships determined based on the second touch signal are served as the limit position relationships.

After receiving the second touch signal, the electronic device determines, based on the second touch signal, relative position relationships between the palm heel and different fingers when the target palm touches the touch screen in the completely stretched state, and serves the relative position relationships determined based on the second touch signal as the limit position relationships.

It is to be noted that the electronic device obtains the limit position relationships in an obtaining manner similar to that for the electronic device to obtain the position relationships between the palm heel and different fingers when the user's palm touches the touch screen in the completely stretched state in the step 202, for the technical details please refer to the step 202, which will not be redundantly described here.

It is to be further noted that because when the electronic device obtains the natural position relationships and the limit position relationships, the user's palm can be away from the touch screen, and when the user uses his palm to touch the touch screen again to request inputting, positions of different fingers of the user's palm on the touch screen are no longer the initial positions obtained in the step 204, so the electronic device performs the step 204 again after obtaining the natural position relationships and the limit position relationships, which will not be redundantly described in the present embodiment.

In step 209, a relative position of the basic key position and other key positions corresponding to each finger is constructed based on a preset ordering manner between the basic key position of the basic key corresponding to each finger and other key positions of other keys corresponding to each finger, natural position relationships between a palm heel of the target palm and different fingers, and limit position relationships between the palm heel of the target palm and different fingers.

Similarly to the case where the user conducts inputting on a physical keyboard, each finger of the user will correspond to and input several constant characters, e.g., the index finger of left hand can input 'f', 'g', 'v', 'b', 'r' 't', '4' and '5', and the ordering manner among respective characters is constant, so each finger corresponds to several different key positions ordered in a preset ordering manner, for detailed diagram of which please refer to Fig. 2G. Therefore, the electronic device can construct the relative position between the basic key position and other key positions corresponding to each finger, based on the preset ordering manner between the basic key position of the basic key corresponding to each finger and other key positions of other keys corresponding to each finger, natural position relationships between the palm heel of the target palm and different fingers, and limit position relationships between the palm heel of the target palm and different fingers.

In actual implementation, among the limit position relationships, the electronic device can construct the farthest position that can be reached by each finger as a key position of a key farthest away from the basic key position of the basic key among respective keys corresponding to the finger. For example, it can be known from Fig. 2G that the key position corresponding to character '5' is farthest away from the basic key position of the basic key 'f' corresponding to the index finger on the touch screen, so the electronic device can set, among the limit position relationships, the farthest position that can be reached by the index finger as the key position corresponding to character '5', and continue to construct based on a preset ordering manner among other key positions corresponding to the index finger and 'f' and '5', and thus determine the relative positions among respective key positions corresponding to each finger on the touch screen.

In step 210, a click signal acting on the touch screen is received.

When the user clicks a certain area on the touch screen, the electronic device can receive the click signal acting on the touch screen.

In step 211, a touch position of a target finger is determined based on the click signal.

The electronic device can determine the touch position of the target finger based on the received click signal. In actual implementation, the electronic device can determine the position where the click signal is received as the touch position of the target finger. The target finger is the finger applying the click signal.

In step 212, a target key position corresponding to the target finger at the touch position is determined based on a displacement between an initial position and the touch position of the target finger, a basic key position of a basic key corresponding to the target finger at the initial position, and a relative position on the touch screen between the basic key position and other key positions of other keys corresponding to the target finger.

The electronic device determines the target key position by steps which can include the following steps.

First, a fingerprint of the target finger is obtained after the click signal is received.

After receiving the click signal, the electronic device can obtain the fingerprint of the target finger which applies the click signal. The electronic device obtains the fingerprint of the target finger in an obtaining manner similar to that for the electronic device to obtain the palm print in the step 201, for technical details please refer to the step 201, which will not be redundantly described here.

Second, the initial position of the target finger is inquired based on the fingerprint of the target finger.

Because the electronic device has determined the initial position of each finger of the target palm in the step 204, so after determining the fingerprint of the target finger, the electronic device can inquire the initial position of the target finger based on the fingerprint of the target finger.

In actual implementation, the electronic device inquires the initial position of the target finger based on the fingerprint of the target finger by an inquiring manner which can include any one of the following manners.

In first manner, the natural position relationships are obtained based on the fingerprint of the target finger, and the initial position of the fingerprint of the target finger are determined based on the start position of the palm print of the palm heel on the touch screen and the natural position relationships.

Because fingerprints can be used to mark different fingers in the natural position relationships, so after obtaining the fingerprint of the target finger, the electronic device can obtain the natural position relationships, and after finding the natural position relationships, the electronic device can inquire, by inquiring the natural position relationships, the initial position of the target finger on the touch screen when the palm heel is placed at the start position.

In second manner, the initial position of the target finger is directly inquired based on the fingerprint of the target finger.

Corresponding to the second determining manner for the electronic device to determine the initial position of each finger of the target palm, after obtaining the fingerprint of the target finger, the electronic device can directly inquire the initial position corresponding to the fingerprint of the target finger.

Third, the displacement between the initial position and the touch position of the target finger is calculated.

Fourth, the target key position corresponding to the target finger at the touch position is determined based on the displacement, the basic key position of the basic key corresponding to the target finger, and the relative position on the touch screen of the basic key position and other key positions of other keys corresponding to the target finger.

Because the basic key position of the basic key corresponding to the target finger at the initial position has been determined, and the relative position on the touch screen of the basic key position of the basic key and other key positions of other keys corresponding to the target finger has also been determined, so after obtaining the displacement, the electronic device can determine the target key position corresponding to the target finger at the touch position.

In step 213, a target character corresponding to the target key position is inputted.

After determining the target key position, the electronic device can input the target character corresponding to the target key position. For example, when the target key position determined by the electronic device is the key position of 't', the electronic device can input the target character 't'.

In sum, after a click signal is received, the input method provided by the present embodiment determines a touch position of a target finger based on the click signal, determines a target key position corresponding to the target finger at the touch position based on a displacement between an initial position and the touch position of the target finger, a basic key position of a basic key corresponding to the target finger at the initial position, and a relative position on the touch screen of the basic key position and other key positions of other keys corresponding to the target finger, and thus inputs a target character corresponding to the target key position; so as to solve the problem in the related art that the input accuracy is low and the input speed is slow, and achieve the following effects: even if the placement position of the user's hands deviates from that in the user's normal use, since the target key position is determined based on the displacement between the initial position and the touch position of the target finger, the electronic device still can input the user's desired character accurately, such that the input accuracy can be improved; meanwhile, since the target key position is determined based on the displacement between the initial position and the touch position of the target finger, the user can conduct inputting on the touch screen according to his own touch-type habit in the physical keyboard, without viewing the virtual keyboard on the touch screen, and thus achieving the effect of improving the input speed.

Meanwhile, in the present embodiment, before constructing the relative positions on the touch screen among key positions of respective keys corresponding to each finger, whether the natural position relationships and the limit position relationships have been stored in the electronic device is detected in advance, such that when the detecting result is that the natural position relationships and the limit position relationships are not stored, the natural position relationships and the limit position relationships can be firstly obtained, and then constructing is performed when the user requests inputting once again, so as to solve the following problem: when the user requesting to input changes, the electronic device cannot construct the relative positions on the touch screen among key positions of respective keys corresponding to each finger, so the electronic device cannot determine the target key position corresponding to the touch position of the target finger, i.e., cannot input the target character.

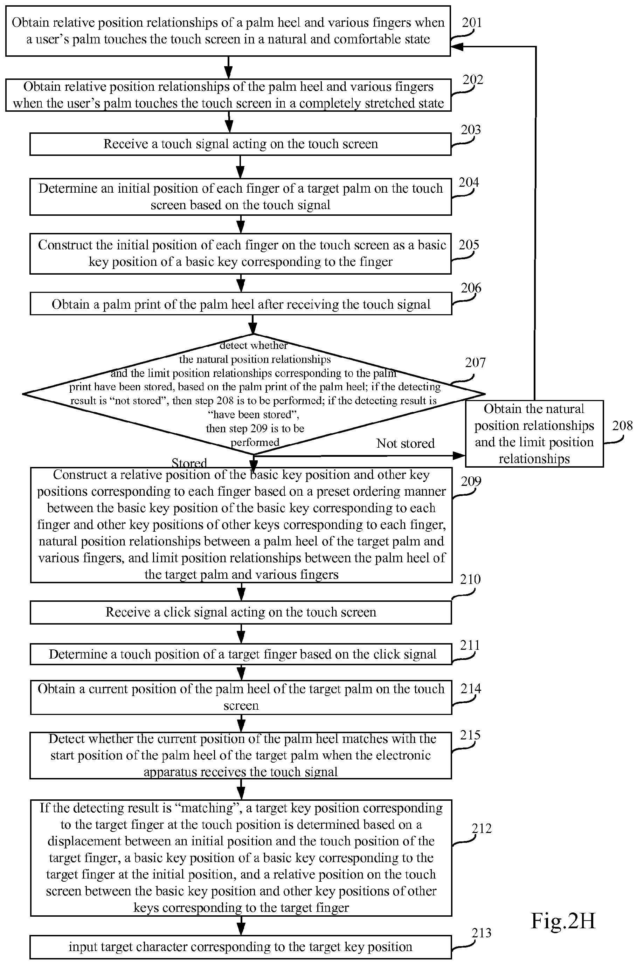

Referring to Fig. 2H, it is to be noted that before performing the step 212, the electronic device can perform the following steps in order to avoid the following problem: after the user applies the touch signal and before the user applies the click signal, the position of the user palm on the touch screen deviates, such that the initial position of the target finger when the user applies the click signal is no longer the position of the target finger when the user applies the touch signal, the target key position determined by the electronic device based on the initial position of the target finger is no longer the target key position that the user actually requests to click, that is, the target character eventually inputted by the electronic device is not the character that the user actually requests to input.

In step 214, a current position of the palm heel of the target palm on the touch screen is obtained.

In order to perform subsequent steps, the electronic device can obtain the current position of the palm heel of the target palm on the touch screen. In actual implementation, the electronic device can detect the touch position of the palm print of the target palm on the touch screen, and regard the detected touch position as the current position of the palm heel of the target palm on the touch screen.

In step 215, it is detected whether the current position of the palm heel matches with the start position of the palm heel of the target palm when the electronic device receives the touch signal.

In order to judge whether the position of the palm heel changes, the electronic device can detect whether the current position of the palm heel matches with the start position of the palm heel of the target palm when the electronic device receives the touch signal.

Accordingly, in the step 212, when the detecting result is "matching", the electronic device is configured to perform the following step: a target key position corresponding to the target finger at the touch position is determined based on a displacement between an initial position and the touch position of the target finger, a basic key position of a basic key corresponding to the target finger at the initial position, and a relative position on the touch screen between the basic key position and other key positions of other keys corresponding to the target finger.

If the detecting result of the electronic device is "matching", it is indicated that the position of the palm heel doesn't change, i.e., the initial position of the target finger doesn't change, then the electronic device can directly perform the step 212.

If the detecting result of the electronic device is "not matching", it is indicated that the position of the palm heel has changed; then, in order to avoid the problem that the target key position determined by the electronic device is not the key position that the user actually needs to click, i.e., the target character actually inputted by the electronic device is not the character that the user actually wants to input, the electronic device will go to the step 204 again, so as to re-determine the initial position of the target finger, which will not be redundantly described in the present embodiment.

Device embodiments of the present disclosure, which can be configured to perform the method embodiments of the present disclosure, are set forth below. As to the undisclosed details of the device embodiments of the present disclosure, please refer to the method embodiments of the present disclosure.

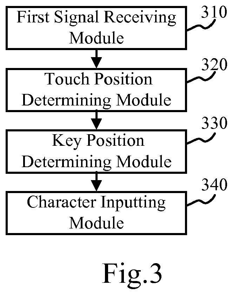

Fig. 3 is a diagram showing an input device according to an exemplary embodiment. As shown in Fig. 3, the input device can include but not limited to: a first signal receiving module 310, a touch position determining module 320, a key position determining module 330 and a character inputting module 340.

The first signal receiving module 310 is configured to receive a click signal acting on the touch screen.

The touch position determining module 320 is configured to determine a touch position of a target finger based on the click signal received by the first signal receiving module 310.

The key position determining module 330 is configured to determine a target key position corresponding to the target finger at the touch position, based on a displacement between an initial position and the touch position of the target finger, a basic key position of a basic key is corresponding to the target finger at the initial position, and a relative position on the touch screen of the basic key position and other key positions of other keys is corresponding to the target finger.

The character inputting module 340 is configured to input a target character corresponding to the target key position determined by the key position determining module 330.

After receiving a click signal, the input device provided by the present embodiment determines a touch position of a target finger based on the click signal, determines a target key position corresponding to the target finger at the touch position based on a displacement between an initial position and the touch position of the target finger, a basic key position of a basic key is corresponding to the target finger at the initial position, and a relative position on the touch screen of the basic key position and other key positions of other keys is corresponding to the target finger, and thereby inputs a target character corresponding to the target key position; so as to solve the problem in the related art that the input accuracy is low and the input speed is slow, and achieve the following effects. Even if the placement position of the user's hands deviates from that in the user's normal use, since the target key position is determined based on the displacement between the initial position and the touch position of the target finger, the electronic device still can input the user's desired character accurately, such that the input accuracy can be improved; meanwhile, since the target key position is determined based on the displacement between the initial position and the touch position of the target finger, the user can conduct inputting on the touch screen according to his own touch-type habit in the physical keyboard, without viewing the virtual keyboard on the touch screen, and thus achieving the effect of improving the input speed.

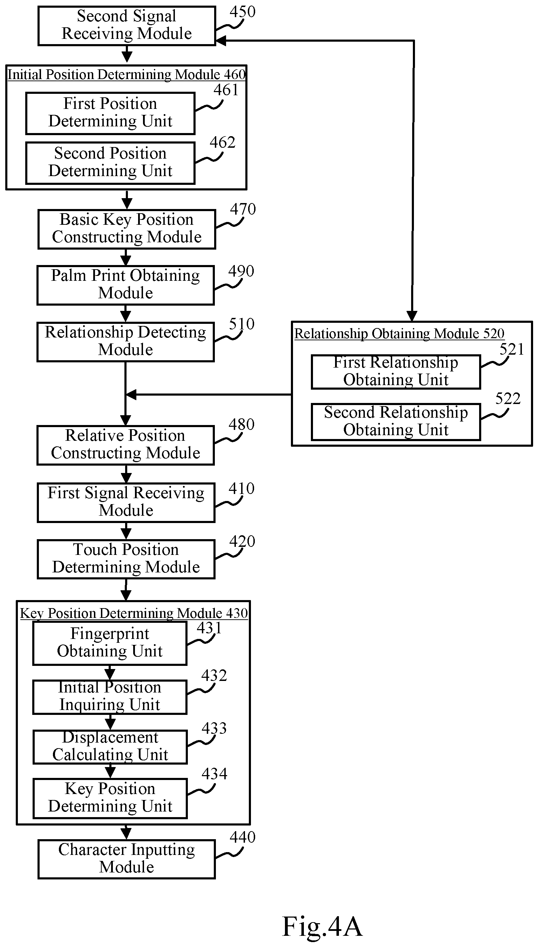

Fig. 4A is a diagram showing an input device according to an exemplary embodiment. As shown in Fig. 4A, the input device can include but not limited to: a first signal receiving module 410, a touch position determining module 420, a key position determining module 430 and a character inputting module 440.

The first signal receiving module 410 is configured to receive a click signal acting on the touch screen.

The touch position determining module 420 is configured to determine a touch position of a target finger based on the click signal received by the first signal receiving module 410.

The key position determining module 430 is configured to determine a target key position corresponding to the target finger at the touch position, based on a displacement between an initial position and the touch position of the target finger, a basic key position of a basic key is corresponding to the target finger at the initial position, and a relative position on the touch screen of the basic key position and other key positions of other keys is corresponding to the target finger.

The character inputting module 440 is configured to input a target character corresponding to the target key position determined by the key position determining module 430.

A first possible implementation of the embodiment shown in Fig. 4A is as follows.

A second signal receiving module 450 is configured to receive a touch signal acting on the touch screen.

An initial position determining module 460 is configured to determine an initial position of each finger of a target palm on the touch screen based on the touch signal received by the second signal receiving module 450.

A basic key position constructing module 470 is configured to construct the initial position of each finger on the touch screen as a basic key position of a basic key corresponding to the finger.

A relative position constructing module 480 is configured to construct a relative position of the basic key position and other key positions corresponding to each finger, based on a preset ordering manner between the basic key position of the basic key corresponding to each finger and other key positions of other keys corresponding to each finger, natural position relationships between a palm heel of the target palm and different fingers, and limit position relationships between the palm heel of the target palm and different fingers.

The natural position relationships are relative position relationships between the palm heel and different fingers when the target palm touches the touch screen in a natural and comfortable state.

The limit position relationships are relative position relationships between the palm heel and different fingers when the target palm touches the touch screen in a completely stretched state.

In a second possible implementation of the embodiment shown in Fig. 4A, the initial position determining module 460 includes: a first position determining unit 461 or a second position determining unit 462.

The first position determining unit 461 is configured, when a palm print is used to mark the palm heel and fingerprints are used to mark different fingers in the natural position relationships, to obtain a palm print of the palm heel based on the touch signal and determine a start position of the palm print on the touch screen; configured to obtain the natural position relationships corresponding to the palm print; and configured to determine the initial position of each finger on the touch screen based on the start position of the palm print on the touch screen and the natural position relationships.

The second position determining unit 462, that does not form part of the claimed invention, is configured, when fingerprints are used to mark different fingers in the natural position relationships and/or the limit position relationships, to obtain different fingerprints based on the touch signal after receiving the touch signal; configured to identify each finger based on the different fingerprints, and to determine the initial position of each finger on the touch screen based on a position of each fingerprint in the touch signal.

In a third possible implementation of the embodiment shown in Fig. 4A, the key position determining module 430 includes: a fingerprint obtaining unit 431 configured to obtain a fingerprint of the target finger after receiving the click signal; an initial position inquiring unit 432 configured to inquire the initial position of the target finger based on the fingerprint of the target finger; a displacement calculating unit 433 configured to calculate the displacement between the initial position and the touch position of the target finger; and a key position determining unit 434 configured to determine the target key position corresponding to the target finger at the touch position, based on the displacement, the basic key position of the basic key is corresponding to the target finger, and the relative position on the touch screen of the basic key position and other key positions of other keys is corresponding to the target finger.

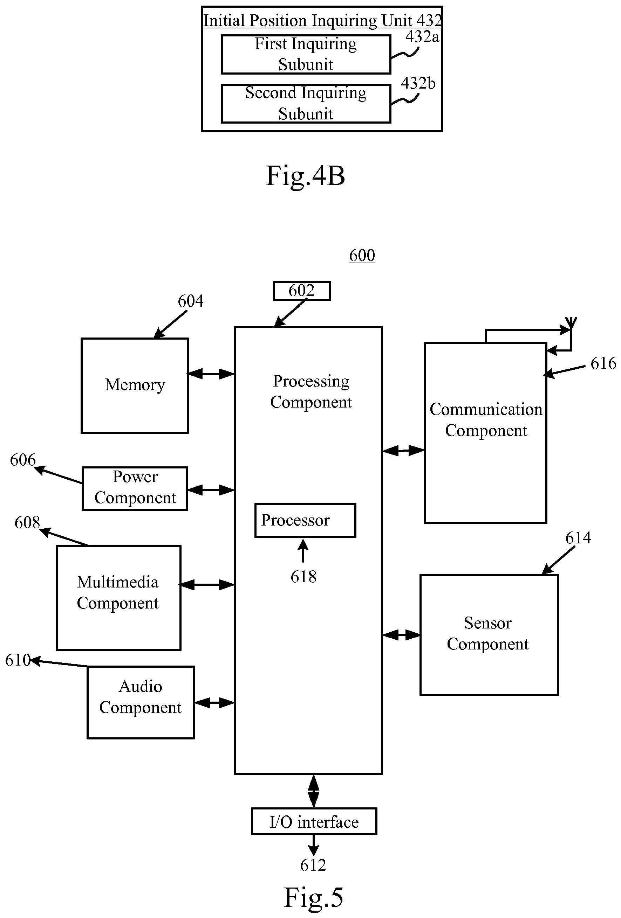

Referring to Fig. 4B, in a fourth possible implementation of the embodiment shown in Fig. 4A, the initial position inquiring unit 432 includes: a first inquiring subunit 432a or a second inquiring subunit 432b.

The first inquiring subunit 432a is configured to obtain the natural position 24 relationships based on the fingerprint of the target finger, and to determine the initial position of the fingerprint of the target finger based on the start position of the palm print of the palm heel on the touch screen and the natural position relationships.

The second inquiring subunit 432b is configured to directly inquire the initial position of the fingerprint of the target finger based on the fingerprint of the target finger.

In a fifth possible implementation of the embodiment shown in Fig. 4A, the device further includes: a palm print obtaining module 490 configured, when a palm print is used to mark the palm heel in the natural position relationships and the limit position relationships, to obtain a palm print of the palm heel after receiving the touch signal; a relationship detecting module 510 configured to detect whether the natural position relationships and the limit position relationships have been stored, based on the palm print of the palm heel obtained by the palm print obtaining module 490; and a relationship obtaining module 520 configured, when a detecting result of the relationship detecting module 510 is that the natural position relationships and the limit position relationships are not stored, to obtain the natural position relationships and the limit position relationships.

In a sixth possible implementation of the embodiment shown in Fig. 4A, the relationship obtaining module 520 includes: a first relationship obtaining unit 521 and a second relationship obtaining unit 522.

The first relationship obtaining unit 521 is configured to receive a first touch signal acting on a first interface, the first interface is configured to prompt a user to touch the touch screen by the target palm in a natural and comfortable state; configured to determine, based on the first touch signal, relative position relationships between the palm heel and different fingers when the target palm touches the touch screen in the natural and comfortable state; and configured to serve the relative position relationships determined based on the first touch signal as the natural position relationships.

The second relationship obtaining unit 522 is configured to receive a second touch signal acting on a second interface, the second interface is configured to prompt the user to touch the touch screen by the target palm in a completely stretched state; configured to determine, based on the second touch signal, relative position relationships between the palm heel and different fingers when the target palm touches the touch screen in the completely stretched state; and configured to serve the relative position relationships determined based on the second touch signal as the limit position relationships.

In sum, after receiving a click signal, the input device provided by the present embodiment determines a touch position of a target finger based on the click signal, determines a target key position corresponding to the target finger at the touch position based on a displacement between an initial position and the touch position of the target finger, a basic key position of a basic key corresponding to the target finger at the initial position, and a relative position on the touch screen between the basic key position and other key positions of other keys corresponding to the target finger, and thereby inputs a target character corresponding to the target key position; so as to solve the problem in the related art that the input accuracy is low and the input speed is slow, and achieve the following effects. Even if the placement position of the user's hands deviates from that in the user's normal use, since the target key position is determined based on the displacement between the initial position and the touch position of the target finger, the electronic apparatus still can input the user's desired character accurately, such that the input accuracy can be improved; meanwhile, since the target key position is determined based on the displacement between the initial position and the touch position of the target finger, the user can conduct inputting on the touch screen according to his own touch-type habit in the physical keyboard, without viewing the virtual keyboard on the touch screen, and thus achieving the effect of improving the input speed.

Fig. 5 is a diagram showing an apparatus 600 for inputting according to an exemplary embodiment. For example, the apparatus 600 can be a mobile phone, a computer, a digital broadcast terminal, a messaging device, a gaming console, a tablet, a medical device, an exercise equipment, a personal digital assistant, and the like.

Referring to Fig. 5, the apparatus 600 can include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the apparatus 600, such as the operations associated with display, telephone calls, data communications, camera operations, and recording operations. The processing component 602 can include one or more processors 618 to execute instructions to perform all or part of the steps in the above-described methods. Moreover, the processing component 602 can include one or more modules which facilitate the interaction between the processing component 602 and other components. For instance, the processing component 602 can include a multimedia module to facilitate the interaction between the multimedia component 608 and the processing component 602.

The memory 604 is configured to store various types of data to support the operation of the apparatus 600. Examples of such data include instructions for any applications or methods operated on the apparatus 600, contact data, phonebook data, messages, pictures, video, and so on. The memory 604 can be implemented using any type of volatile or nonvolatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the apparatus 600. The power component 606 can include a power management system, one or more power supplies, and other components associated with the generation, management, and distribution of power in the apparatus 600.

The multimedia component 608 includes a screen providing an output interface between the apparatus 600 and the user. In some embodiments, the screen can include a liquid crystal display (LCD) and a touch panel (TP). If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action. In some embodiments, the multimedia component 608 includes a front camera and/or a rear camera. The front camera and the rear camera can receive an external multimedia datum while the apparatus 600 is in an operation mode, such as a photographing mode or a video mode. Each of the front camera and the rear camera can be a fixed optical lens system or have focus and optical zoom capability.

The audio component 610 is configured to output and/or input audio signals. For example, the audio component 610 includes a microphone (MIC) configured to receive an external audio signal when the apparatus 600 is in an operation mode, such as a call mode, a recording mode, and a voice recognition mode. The received audio signal can be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons can include, but are not limited to, a home button, a volume button, a starting button, and a locking button.

The sensor component 614 includes one or more sensors to provide status assessments of various aspects of the apparatus 600. For instance, the sensor component 614 can detect an open/closed status of the apparatus 600, relative positioning of components, e.g., the display and the keypad, of the apparatus 600, a change in position of the apparatus 600 or a component of apparatus 600, a presence or absence of user contact with the apparatus 600, an orientation or an acceleration/deceleration of the apparatus 600, and a change in temperature of the apparatus 600. The sensor component 614 can include a proximity sensor configured to detect the presence of nearby objects without any physical contact. The sensor component 614 can also include a light sensor, such as a CMOS or CCD image sensor, for use in imaging applications. In some embodiments, the sensor component 614 can also include an accelerometer sensor, a gyroscope sensor, a magnetic sensor, a pressure sensor, or a temperature sensor.

The communication component 616 is configured to facilitate communication, wired or wirelessly, between the apparatus 600 and other devices. The apparatus 600 can access a wireless network based on a communication standard, such as WiFi, 2G, or 3G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 600 can be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 604, executable by the processor 618 in the apparatus 600, for performing the above-described methods. For example, the non-transitory computer-readable storage medium can be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. It is intended that the specification and embodiments be considered as exemplary only, with a true scope of the invention being indicated by the following claims. It will be appreciated that the present invention is not limited to the exact construction that has been described above and illustrated in the accompanying drawings, and that various modifications and changes can be made without departing from the scope thereof as defined by the appended claims. It is intended that the scope of the invention only be limited by the appended claims.

## Claims

1. An input method, the method is applied in an electronic device comprising a touch screen, and the method comprises:
receiving (101, 210) a click signal from the touch screen;
determining (102, 211) a touch position of a target finger based on the click signal;
determining (103, 212) a target key position corresponding to the target finger at the touch position, based on a displacement between an initial position and the touch position of the target finger, a basic key position of a basic key corresponding to the target finger at the initial position, and a relative position on the touch screen of the basic key position and other key positions of other keys corresponding to the target finger; and
inputting (104, 213) a target character corresponding to the target key position;
the method further comprising:
receiving (203) a touch signal from the touch screen;
determining (204) an initial position of each finger of a target palm on the touch screen based on the touch signal;
constructing (205) the initial position of each finger on the touch screen as a basic key position of a basic key corresponding to the finger; and
constructing (209) a relative position of the basic key position and other key positions corresponding to each finger, based on a preset ordering manner between the basic key position of the basic key corresponding to each finger and other key positions of other keys corresponding to each finger, natural position relationships between a palm heel of the target palm and various fingers, and limit position relationships between the palm heel of the target palm and various fingers; wherein,
the natural position relationships are relative position relationships between the palm heel and various fingers when the target palm touches the touch screen in a natural and comfortable state; and
the limit position relationships are relative position relationships between the palm heel and various fingers when the target palm touches the touch screen in a completely stretched state;
the method further comprising:
using a palm print to mark the palm heel in the natural position relationships and the limit position relationships, by obtaining (206) a palm print of the palm heel after the touch signal is received;
detecting (207) whether the natural position relationships and the limit position relationships corresponding to the palm print have been stored, based on the palm print of the palm heel; and
if a detecting result is that the natural position relationships and the limit position relationships are not been stored, obtaining (208) the natural position relationships and the limit position relationships,
wherein said obtaining the natural position relationships and the limit position relationships comprises:
receiving a first touch signal acting on a first interface, the first interface being configured to prompt a user to touch the touch screen by the target palm in a natural and comfortable state;
obtaining a palm print of the palm heel from the first touch signal so as to mark the palm heel;
determining, based on the first touch signal, relative position relationships between the palm heel and various fingers when the target palm touches the touch screen in the natural and comfortable state;
serving the relative position relationships determined based on the first touch signal as the natural position relationships;
receiving a second touch signal acting on a second interface, the second interface being configured to prompt the user to touch the touch screen by the target palm in a completely stretched state; obtaining a palm print of the palm heel from the second touch signal so as to mark the palm heel;
determining, based on the second touch signal, relative position relationships between the palm heel and various fingers when the target palm touches the touch screen in the completely stretched state; and
serving the relative position relationships determined based on the second touch signal as the limit position relationships.

2. The method according to claim 1, wherein said determining an initial position of each finger of a target palm on the touch screen based on the touch signal comprises:
if a palm print is used to mark the palm heel and fingerprints are used to mark different fingers in the natural position relationships, obtaining a palm print of the palm heel based on the touch signal and determining a start position of the palm print on the touch screen;
obtaining the natural position relationships corresponding to the palm print; and
determining the initial position of each finger on the touch screen based on the start position of the palm print on the touch screen and the natural position relationships.

3. The method according to claim 2, wherein said determining a target key position corresponding to the target finger at the touch position, based on a displacement between an initial position and the touch position of the target finger, a basic key position of a basic key corresponding to the target finger at the initial position, and a relative position on the touch screen of the basic key position and other key positions of other keys corresponding to the target finger comprises:
obtaining a fingerprint of the target finger after the click signal is received;
inquiring the initial position of the target finger based on the fingerprint of the target finger;
calculating the displacement between the initial position and the touch position of the target finger; and
determining the target key position corresponding to the target finger at the touch position, based on the displacement, the basic key position of the basic key corresponding to the target finger, and the relative position on the touch screen of the basic key position and other key positions of other keys corresponding to the target finger.

4. An electronic apparatus comprising a touch screen, and the electronic apparatus comprises:
a first signal receiving module (310, 410) configured to receive a click signal from the touch screen;
a touch position determining module (320, 420) configured to determine a touch position of a target finger based on the click signal received by the first signal receiving module;
a key position determining module (330, 430) configured to determine a target key position corresponding to the target finger at the touch position, based on a displacement between an initial position and the touch position of the target finger, a basic key position of a basic key corresponding to the target finger at the initial position, and a relative position on the touch screen of the basic key position and other key positions of other keys corresponding to the target finger; and
a character inputting module (340, 440) configured to input a target character corresponding to the target key position determined by the key position determining module,
the electronic apparatus further comprises:
a second signal receiving module (450) configured to receive a touch signal from the touch screen;
an initial position determining module (460) configured to determine an initial position of each finger of a target palm on the touch screen based on the touch signal received by the second signal receiving module;
a basic key position constructing module (470) configured to construct the initial position of each finger on the touch screen as a basic key position of a basic key corresponding to the finger; and
a relative position constructing module (480) configured to construct a relative position of the basic key position and other key positions corresponding to each finger, based on a preset ordering manner between the basic key position of the basic key corresponding to each finger and other key positions of other keys corresponding to each finger, natural position relationships between a palm heel of the target palm and various fingers, and limit position relationships between the palm heel of the target palm and various fingers; wherein,
the natural position relationships are relative position relationships between the palm heel and various fingers when the target palm touches the touch screen in a natural and comfortable state; and
the limit position relationships are relative position relationships between the palm heel and various fingers when the target palm touches the touch screen in a completely stretched state,
wherein the electronic apparatus further comprises:
a palm print obtaining module (490) configured, to use a palm print to mark the palm heel in the natural position relationships and the limit position relationships, by obtaining a palm print of the palm heel after the touch signal is received;
a relationship detecting module (510) configured to detect whether the natural position relationships and the limit position relationships have been stored, based on the palm print of the palm heel obtained by the palm print obtaining module; and
a relationship obtaining module (520) configured, when a detecting result of the relationship detecting module is that the natural position relationships and the limit position relationships are not been stored, to obtain the natural position relationships and the limit position relationships;
wherein the relationship obtaining module comprises:
a first relationship obtaining unit (521) configured to receive a first touch signal acting on a first interface, the first interface being configured to prompt a user to touch the touch screen by the target palm in a natural and comfortable state; to obtain a palm print of the palm heel from the first touch signal so as to mark the palm heel;
to determine, based on the first touch signal, relative position relationships between the palm heel and various fingers when the target palm touches the touch screen in the natural and comfortable state so as to mark the palm heel; and to serve the relative position relationships determined based on the first touch signal as the natural position relationships; and
a second relationship obtaining unit (522) configured to receive a second touch signal acting on a second interface, the second interface being configured to prompt the user to touch the touch screen by the target palm in a completely stretched state; to obtain a palm print of the palm heel from the second touch signal so as to mark the palm heel; determine, based on the second touch signal, relative position relationships between the palm heel and various fingers when the target palm touches the touch screen in the completely stretched state; and to serve the relative position relationships determined based on the second touch signal as the limit position relationships.

5. The electronic apparatus according to claim 4, wherein the initial position determining module comprises:
a first position determining unit (461);
the first position determining unit is configured, when a palm print is used to mark the palm heel and fingerprints are used to mark various fingers in the natural position relationships, to obtain a palm print of the palm heel based on the touch signal and determine a start position of the palm print on the touch screen; to obtain the natural position relationships corresponding to the palm print; and to determine the initial position of each finger on the touch screen based on the start position of the palm print on the touch screen and the natural position relationships.

6. The electronic apparatus according to claim 5, wherein the key position determining module comprises:
a fingerprint obtaining unit (431) configured to obtain a fingerprint of the target finger after the click signal is received;
an initial position inquiring unit (432) configured to inquire the initial position of the target finger based on the fingerprint of the target finger;
a displacement calculating unit (433) configured to calculate the displacement between the initial position and the touch position of the target finger; and
a key position determining unit (434) configured to determine the target key position corresponding to the target finger at the touch position, based on the displacement, the basic key position of the basic key corresponding to the target finger, and the relative position on the touch screen of the basic key position and other key positions of other keys corresponding to the target finger.

7. A computer program, which when executing on a processor of an apparatus according to any of the claims 4 to 6 performs a method according to any of claims 1 to 3.

## Patentansprüche

1. Eingabeverfahren, wobei das Verfahren in einer elektronischen Vorrichtung angewendet wird, die einen Berührungsbildschirm aufweist, und das Verfahren Folgendes aufweist:
Empfangen (101, 210) eines Klicksignals vom Berührungsbildschirm;
Bestimmen (102, 211) einer Berührungsposition eines Zielfingers auf Basis des Klicksignals;
Bestimmen (103, 212) einer Zieltastenposition, die dem Zielfinger an der Berührungsposition entspricht, auf Basis einer Distanz zwischen einer Ausgangsposition und der Berührungsposition des Zielfingers, einer Basistastenposition einer Basistaste, die dem Zielfinger an der Ausgangsposition entspricht, und einer relativen Position auf dem Berührungsbildschirm der Basistastenposition und anderer Tastenpositionen anderer Tasten, die dem Zielfinger entsprechen; und
Eingeben (104, 213) eines Zielzeichens, das der Zieltastenposition entspricht;
wobei das Verfahren ferner Folgendes aufweist:
Empfangen (203) eines Berührungssignals von dem Berührungsbildschirm;
Bestimmen (204) einer Ausgangsposition jedes Fingers eines Zielhandtellers auf dem Berührungsbildschirm auf Basis des Berührungssignals;
Konstruieren (205) der Ausgangsposition jedes Fingers auf dem Berührungsbildschirm als eine Basistastenposition einer Basistaste, die dem Finger entspricht; und
Konstruieren (209) einer relativen Position der Basistastenposition und anderer Tastenpositionen, die jedem Finger entsprechen, auf Basis einer vorgegebenen Ordnungsweise zwischen der Basistastenposition der Basistaste, die jedem Finger entspricht, und anderen Tastenpositionen anderer Tasten, die jedem Finger entsprechen, natürlicher Positionsbeziehungen zwischen einem Handballen des Zielhandtellers und verschiedenen Fingern und von Grenzpositionsbeziehungen zwischen dem Handballen des Zielhandtellers und verschiedenen Fingern; wobei
die natürlichen Positionsbeziehungen relative Positionsbeziehungen zwischen dem Handballen und verschiedenen Fingern sind, wenn der Zielhandteller den Berührungsbildschirm in einem natürlichen und bequemen Zustand berührt; und
die Grenzpositionsbeziehungen relative Positionsbeziehungen zwischen dem Handballen und verschiedenen Fingern sind, wenn der Zielhandteller den Berührungsbildschirm in einem völlig gestreckten Zustand berührt;
wobei das Verfahren ferner Folgendes aufweist:
Verwenden eines Handtellerabdrucks, um den Handballen in den natürlichen Positionsbeziehungen und den Grenzpositionsbeziehungen zu markieren, durch Beschaffen (206) eines Handtellerabdrucks des Handballens nach Empfangen des Berührungssignals;
Erkennen (207), ob die natürlichen Positionsbeziehungen und die Grenzpositionsziehungen, die dem Handtellerabdruck entsprechen, gespeichert wurden, auf Basis des Handtellerabdrucks des Handballens; und,
falls ein Erkennungsergebnis das ist, dass die natürlichen Positionsbeziehungen und die Grenzpositionsbeziehungen nicht gespeichert werden, Beschaffen (208) der natürlichen Positionsbeziehungen und der Grenzpositionsbeziehungen,
wobei das genannte Beschaffen der natürlichen Positionsbeziehungen und der Grenzpositionsziehungen Folgendes aufweist:
Empfangen eines auf eine erste Schnittstelle wirkenden ersten Berührungssignals, wobei die erste Schnittstelle zum Auffordern eines Benutzers, den Berührungsbildschirm mit dem Zielhandteller in einem natürlichen und bequemen Zustand zu berühren, konfiguriert ist;
Beschaffen eines Handtellerabdrucks des Handballens anhand des ersten Berührungssignals, um den Handballen zu markieren;
Bestimmen, auf Basis des ersten Berührungssignals, von relativen Positionsbeziehungen zwischen dem Handballen und verschiedenen Fingern, wenn der Zielhandteller den Berührungsbildschirm im natürlichen und bequemen Zustand berührt;
Darbieten der auf Basis des ersten Berührungssignals bestimmten relativen Positionsbeziehungen als die natürlichen Positionsbeziehungen;
Empfangen eines auf eine zweite Schnittstelle wirkenden zweiten Berührungssignals, wobei die zweite Schnittstelle zum Auffordern des Benutzers, den Berührungsbildschirm mit dem Zielhandteller in einem völlig gestreckten Zustand zu berühren, konfiguriert ist;
Beschaffen eines Handtellerabdrucks des Handballens anhand des zweiten Berührungssignals, um den Handballen zu markieren;
Bestimmen, auf Basis des zweiten Berührungssignals, von relativen Positionsbeziehungen zwischen dem Handballen und verschiedenen Fingern, wenn der Zielhandteller den Berührungsbildschirm im völlig gestreckten Zustand berührt; und
Darbieten der auf Basis des zweiten Berührungssignals bestimmten relativen Positionsbeziehungen als die Grenzpositionsbeziehungen.

2. Verfahren nach Anspruch 1, wobei das genannte Bestimmen einer Ausgangsposition jedes Fingers eines Zielhandtellers auf dem Berührungsbildschirm auf Basis des Berührungssignals Folgendes aufweist:
falls ein Handtellerabdruck zum Markieren des Handballens verwendet wird und Fingerabdrücke zum Markieren verschiedener Finger in den natürlichen Positionsbeziehungen verwendet werden, Beschaffen eines Handtellerabdrucks des Handballens auf Basis des Berührungssignals und Bestimmen einer Anfangsposition des Handtellerabdrucks auf dem Berührungsbildschirm;
Beschaffen der natürlichen Positionsbeziehungen, die dem Handtellerabdruck entsprechen; und
Bestimmen der Ausgangsposition jedes Fingers auf dem Berührungsbildschirm auf Basis der Anfangsposition des Handtellerabdrucks auf dem Berührungsbildschirm und der natürlichen Positionsbeziehungen.

3. Verfahren nach Anspruch 2, wobei das genannte Bestimmen einer Zieltastenposition, die dem Zielfinger an der Berührungsposition entspricht, auf Basis einer Distanz zwischen einer Ausgangsposition und der Berührungsposition des Zielfingers, einer Basistastenposition einer Basistaste, die dem Zielfinger an der Ausgangsposition entspricht, und einer relativen Position auf dem Berührungsbildschirm der Basistastenposition und anderer Tastenpositionen anderer Tasten, die dem Zielfinger entsprechen, Folgendes aufweist:
Beschaffen eines Fingerabdrucks des Zielfingers nach Empfangen des Klicksignals;
Abfragen der Ausgangsposition des Zielfingers auf Basis des Fingerabdrucks des Zielfingers;
Berechnen der Distanz zwischen der Ausgangsposition und der Berührungsposition des Zielfingers; und
Bestimmen der Zieltastenposition, die dem Zielfinger an der Berührungsposition entspricht, auf Basis der Distanz, der Basistastenposition der Basistaste, die dem Zielfinger entspricht, und der relativen Position auf dem Berührungsbildschirm der Basistastenposition und anderer Tastenpositionen anderer Tasten, die dem Zielfinger entsprechen.

4. Elektronische Vorrichtung, die einen Berührungsbildschirm aufweist, und wobei die elektronische Vorrichtung Folgendes aufweist:
ein erstes Signalempfangsmodul (310, 410), das zum Empfangen eines Klicksignals vom Berührungsbildschirm konfiguriert ist;
ein Berührungspositionsbestimmungsmodul (320, 420), das zum Bestimmen einer Berührungsposition eines Zielfingers auf Basis des durch das ersten Signalempfangsmodul empfangenen Klicksignals konfiguriert ist;
ein Tastenpositionsbestimmungsmodul (330, 430), das zum Bestimmen einer Zieltastenposition, die dem Zielfinger an der Berührungsposition entspricht, auf Basis einer Distanz zwischen einer Ausgangsposition und der Berührungsposition des Zielfingers, einer Basistastenposition einer Basistaste, die dem Zielfinger an der Ausgangsposition entspricht, und einer relativen Position auf dem Berührungsbildschirm der Basistastenposition und anderer Tastenpositionen anderer Tasten, die dem Zielfinger entsprechen, konfiguriert ist; und
ein Zeicheneingabemodul (340, 440), das zum Eingeben eines Zielzeichens, das der durch das Tastenpositionsbestimmungsmodul bestimmten Zieltastenposition entspricht, konfiguriert ist;
wobei die elektronische Vorrichtung ferner Folgendes aufweist:
ein zweites Signalempfangsmodul (450), das zum Empfangen eines Berührungssignals von dem Berührungsbildschirm konfiguriert ist;
ein Ausgangspositionsbestimmungsmodul (460), das zum Bestimmen einer Ausgangsposition jedes Fingers eines Zielhandtellers auf dem Berührungsbildschirm auf Basis des durch das zweite Signalempfangsmodul empfangenen Berührungssignals konfiguriert ist;
ein Basistastenpositions-Konstruktionsmodul (470), das zum Konstruieren der Ausgangsposition jedes Fingers auf dem Berührungsbildschirm als eine Basistastenposition einer Basistaste, die dem Finger entspricht, konfiguriert ist; und
ein Relative-Position-Konstruktionsmodul (480), das zum Konstruieren einer relativen Position der Basistastenposition und anderer Tastenpositionen, die jedem Finger entsprechen, auf Basis einer vorgegebenen Ordnungsweise zwischen der Basistastenposition der Basistaste, die jedem Finger entspricht, und anderen Tastenpositionen anderer Tasten, die jedem Finger entsprechen, natürlicher Positionsbeziehungen zwischen einem Handballen des Zielhandtellers und verschiedenen Fingern und von Grenzpositionsbeziehungen zwischen dem Handballen des Zielhandtellers und verschiedenen Fingern konfiguriert ist; wobei
die natürlichen Positionsbeziehungen relative Positionsbeziehungen zwischen dem Handballen und verschiedenen Fingern sind, wenn der Zielhandteller den Berührungsbildschirm in einem natürlichen und bequemen Zustand berührt; und
die Grenzpositionsbeziehungen relative Positionsbeziehungen zwischen dem Handballen und verschiedenen Fingern sind, wenn der Zielhandteller den Berührungsbildschirm in einem völlig gestreckten Zustand berührt;
wobei die elektronische Vorrichtung ferner Folgendes aufweist:
ein Handtellerabdruck-Beschaffungsmodul (490), das zum Verwenden eines Handtellerabdrucks, um den Handballen in den natürlichen Positionsbeziehungen und den Grenzpositionsbeziehungen zu markieren, durch Beschaffen eines Handtellerabdrucks des Handballens nach Empfangen des Berührungssignals konfiguriert ist;
ein Beziehungserkennungsmodul (510), das zum Erkennen, ob die natürlichen Positionsbeziehungen und die Grenzpositionsziehungen gespeichert wurden, auf Basis des durch das Handtellerabdruck-Beschaffungsmodul beschafften Handtellerabdrucks des Handballens konfiguriert ist; und
ein Beziehungsbeschaffungsmodul (520), das zum Beschaffen der natürlichen Positionsbeziehungen und der Grenzpositionsbeziehungen, wenn ein Erkennungsergebnis des Beziehungserkennungsmoduls das ist, dass die natürlichen Positionsbeziehungen und die Grenzpositionsbeziehungen nicht gespeichert werden, konfiguriert ist;
wobei das Beziehungsbeschaffungsmodul Folgendes aufweist:
eine erste Beziehungsbeschaffungseinheit (521), die konfiguriert ist zum Empfangen eines auf eine erste Schnittstelle wirkenden ersten Berührungssignals, wobei die erste Schnittstelle zum Auffordern eines Benutzers, den Berührungsbildschirm mit dem Zielhandteller in einem natürlichen und bequemen Zustand zu berühren, konfiguriert ist; zum Beschaffen eines Handtellerabdrucks des Handballens anhand des ersten Berührungssignals, um den Handballen zu markieren; zum Bestimmen, auf Basis des ersten Berührungssignals, von relativen Positionsbeziehungen zwischen dem Handballen und verschiedenen Fingern, wenn der Zielhandteller den Berührungsbildschirm im natürlichen und bequemen Zustand berührt, um den Handballen zu markieren; und zum Darbieten der auf Basis des ersten Berührungssignals bestimmten relativen Positionsbeziehungen als die natürlichen Positionsbeziehungen; und
eine zweite Beziehungsbeschaffungseinheit (522), die konfiguriert ist zum Empfangen eines auf eine zweite Schnittstelle wirkenden zweiten Berührungssignals, wobei die zweite Schnittstelle zum Auffordern des Benutzers, den Berührungsbildschirm mit dem Zielhandteller in einem völlig gestreckten Zustand zu berühren, konfiguriert ist; zum Beschaffen eines Handtellerabdrucks des Handballens anhand des zweiten Berührungssignals, um den Handballen zu markieren; zum Bestimmen, auf Basis des zweiten Berührungssignals, von relativen Positionsbeziehungen zwischen dem Handballen und verschiedenen Fingern, wenn der Zielhandteller den Berührungsbildschirm im völlig gestreckten Zustand berührt; und zum Darbieten der auf Basis des zweiten Berührungssignals bestimmten relativen Positionsbeziehungen als die Grenzpositionsbeziehungen.

5. Elektronische Vorrichtung nach Anspruch 4, wobei das Ausgangspositionsbestimmungsmodul Folgendes aufweist:
eine erste Positionsbestimmungseinheit (461); wobei die erste Positionsbestimmungseinheit, wenn ein Handtellerabdruck zum Markieren des Handballens verwendet wird und Fingerabdrücke zum Markieren verschiedener Finger in den natürlichen Positionsbeziehungen verwendet werden, konfiguriert ist zum Beschaffen eines Handtellerabdrucks des Handballens auf Basis des Berührungssignals und Bestimmen einer Anfangsposition des Handtellerabdrucks auf dem Berührungsbildschirm; zum Beschaffen der natürlichen Positionsbeziehungen, die dem Handtellerabdruck entsprechen; und zum Bestimmen der Ausgangsposition jedes Fingers auf dem Berührungsbildschirm auf Basis der Anfangsposition des Handtellerabdrucks auf dem Berührungsbildschirm und der natürlichen Positionsbeziehungen.

6. Elektronische Vorrichtung nach Anspruch 5, wobei das Zieltastenpositionsbestimmungsmodul Folgendes aufweist:
eine Fingerabdruckbeschaffungseinheit (431), die zum Beschaffen eines Fingerabdrucks des Zielfingers nach Empfangen des Klicksignals konfiguriert ist;
eine Ausgangspositionsabfrageeinheit (432), die zum Abfragen der Ausgangsposition des Zielfingers auf Basis des Fingerabdrucks des Zielfingers konfiguriert ist;
eine Distanzberechnungseinheit (433), die zum Berechnen der Distanz zwischen der Ausgangsposition und der Berührungsposition des Zielfingers konfiguriert ist; und
eine Tastenpositionsbestimmungseinheit (434), die zum Bestimmen der Zieltastenposition, die dem Zielfinger an der Berührungsposition entspricht, auf Basis der Distanz, der Basistastenposition der Basistaste, die dem Zielfinger entspricht, und der relativen Position auf dem Berührungsbildschirm der Basistastenposition und anderer Tastenpositionen anderer Tasten, die dem Zielfinger entsprechen, konfiguriert ist.

7. Computerprogramm, das bei Ausführung in einem Prozessor einer Vorrichtung nach einem der Ansprüche 4 bis 6 ein Verfahren nach einem der Ansprüche 1 bis 3 durchführt.

## Revendications

1. Procédé d'entrée, le procédé étant appliqué dans un dispositif électronique comprenant un écran tactile, et le procédé comprenant :
la réception (101,210) d'un signal de clic depuis l'écran tactile ;
la détermination (102, 211) d'une position de toucher d'un doigt cible en fonction du signal de clic ;
la détermination (103, 212) d'une position de touche cible correspondant au doigt cible à la position de toucher, en fonction d'un déplacement entre une position initiale et la position de toucher du doigt cible, d'une position de touche de base d'une touche de base correspondant au doigt cible à la position initiale, et d'une position relative sur l'écran tactile de la position de touche de base et d'autres positions de touches d'autres touches correspondant au doigt cible ; et
l'entrée (104, 213) d'un caractère cible correspondant à la position de touche cible ;
le procédé comprenant en outre :
la réception (203) d'un signal de toucher depuis l'écran tactile ;
la détermination (204) d'une position initiale de chaque doigt d'une paume cible sur l'écran tactile en fonction du signal de toucher ;
la construction (205) de la position initiale de chaque doigt sur l'écran tactile en tant que position de touche de base d'une touche de base correspondant au doigt ; et
la construction (209) d'une position relative de la position de touche de base et d'autres positions de touches correspondant à chaque doigt, en fonction d'un mode de mise en ordre préétabli entre la position de touche de base de la touche de base correspondant à chaque doigt et d'autres positions de touches d'autres touches correspondant à chaque doigt, de relations de position naturelle entre un talon de paume de la paume cible et divers doigts, et de relations de position limite entre le talon de paume de la paume cible et divers doigts ; dans lequel,
les relations de position naturelle sont des relations de position relative entre le talon de paume et divers doigts quand la paume cible touche l'écran tactile dans un état naturel et confortable ; et
les relations de position limite sont des relations de position relative entre le talon de paume et divers doigts quand la paume cible touche l'écran tactile dans un état complètement étiré ;
le procédé comprenant en outre :
l'utilisation d'une empreinte de paume pour marquer le talon de paume dans les relations de position naturelle et les relations de position limite, en obtenant (206) une empreinte de paume du talon de paume après la réception du signal de toucher ;
la détection (207) que les relations de position naturelle et les relations de position limite correspondant à l'empreinte de paume ont été mémorisées ou non, en fonction de l'empreinte de paume du talon de paume ; et
si un résultat de détection est que les relations de position naturelle et les relations de position limite ne sont pas mémorisées, l'obtention (208) des relations de position naturelle et des relations de position limite, ladite obtention des relations de position naturelle et des relations de position limite comprenant :
la réception d'un premier signal de toucher agissant sur une première interface, la première interface étant configurée pour inviter un utilisateur à toucher l'écran tactile avec la paume cible dans un état naturel et confortable ;
l'obtention d'une empreinte de paume du talon de paume à partir du premier signal de toucher de manière à marquer le talon de paume ;
la détermination, en fonction du premier signal de toucher, de relations de position relative entre le talon de paume et divers doigts quand la paume cible touche l'écran tactile dans l'état naturel et confortable ;
le traitement des relations de position relative déterminées en fonction du premier signal de toucher en tant que relations de position naturelle ;
la réception d'un second signal de toucher agissant sur une seconde interface, la seconde interface étant configurée pour inviter l'utilisateur à toucher l'écran tactile avec la paume cible dans un état complètement étiré ;
l'obtention d'une empreinte de paume du talon de paume à partir du second signal de toucher de manière à marquer le talon de paume ;
la détermination, en fonction du second signal de toucher, de relations de position relative entre le talon de paume et divers doigts quand la paume cible touche l'écran tactile dans l'état complètement étiré ; et
le traitement des relations de position relative déterminées en fonction du second signal de toucher en tant que relations de position limite.

2. Procédé selon la revendication 1, dans lequel ladite détermination d'une position initiale de chaque doigt d'une paume cible sur l'écran tactile en fonction du signal de toucher comprend
si une empreinte de paume est utilisée pour marquer le talon de paume et des empreintes digitales sont utilisées pour marquer différents doigts dans les relations de position naturelle, l'obtention d'une empreinte de paume du talon de paume en fonction du signal de toucher et la détermination d'une position de début de l'empreinte de paume sur l'écran tactile ;
l'obtention des relations de position naturelle correspondant à l'empreinte de paume ; et la détermination de la position initiale de chaque doigt sur l'écran tactile en fonction de la position de début de l'empreinte de paume sur l'écran tactile et des relations de position naturelle.

3. Procédé selon la revendication 2, dans lequel ladite détermination d'une position de touche cible correspondant au doigt cible à la position de toucher, en fonction d'un déplacement entre une position initiale et la position de toucher du doigt cible, d'une position de touche de base d'une touche de base correspondant au doigt cible à la position initiale, et d'une position relative sur l'écran tactile de la position de touche de base et d'autres positions de touches d'autres touches correspondant au doigt cible comprend :
l'obtention d'une empreinte digitale du doigt cible après la réception du signal de clic ;
l'interrogation de la position initiale du doigt cible en fonction de l'empreinte digitale du doigt cible ;
le calcul du déplacement entre la position initiale et la position de toucher du doigt cible ; et
la détermination de la position de touche cible correspondant au doigt cible à la position de toucher, en fonction du déplacement, de la position de touche de base de la touche de base correspondant au doigt cible, et de la position relative sur l'écran tactile de la position de touche de base et d'autres positions de touches d'autres touches correspondant au doigt cible.

4. Appareil électronique comprenant un écran tactile, et l'appareil électronique comprenant
un premier module de réception de signal (310, 410) configuré pour recevoir un signal de clic depuis l'écran tactile ;
un module de détermination de position de toucher (320, 420) configuré pour déterminer une position de toucher d'un doigt cible en fonction du signal de clic reçu par le premier module de réception de signal ;
un module de détermination de position de touche (330, 430) configuré pour déterminer une position de touche cible correspondant au doigt cible à la position de toucher, en fonction d'un déplacement entre une position initiale et la position de toucher du doigt cible, d'une position de touche de base d'une touche de base correspondant au doigt cible à la position initiale, et d'une position relative sur l'écran tactile de la position de touche de base et d'autres positions de touches d'autres touches correspondant au doigt cible ; et
un module d'entrée de caractère (340, 440) configuré pour entrer un caractère cible correspondant à la position de touche cible déterminée par le module de détermination de position de touche,
l'appareil électronique comprenant en outre :
un second module de réception de signal (450) configuré pour recevoir un signal de toucher depuis l'écran tactile ;
un module de détermination de position initiale (460) configuré pour déterminer une position initiale de chaque doigt d'une paume cible sur l'écran tactile en fonction du signal de toucher reçu par le second module de réception de signal ;
un module de construction de position de touche de base (470) configuré pour construire la position initiale de chaque doigt sur l'écran tactile en tant que position de touche de base d'une touche de base correspondant au doigt ; et
un module de construction de position relative (480) configuré pour construire une position relative de la position de touche de base et d'autres positions de touches correspondant à chaque doigt, en fonction d'un mode de mise en ordre préétabli entre la position de touche de base de la touche de base correspondant à chaque doigt et d'autres positions de touches d'autres touches correspondant à chaque doigt, de relations de position naturelle entre un talon de paume de la paume cible et divers doigts, et de relations de position limite entre le talon de paume de la paume cible et divers doigts ; dans lequel,
les relations de position naturelle sont des relations de position relative entre le talon de paume et divers doigts quand la paume cible touche l'écran tactile dans un état naturel et confortable ; et
les relations de position limite sont des relations de position relative entre le talon de paume et divers doigts quand la paume cible touche l'écran tactile dans un état complètement étiré,
l'appareil électronique comprenant en outre :
un module d'obtention d'empreinte de paume (490) configuré pour utiliser une empreinte de paume pour marquer le talon de paume dans les relations de position naturelle et les relations de position limite, en obtenant une empreinte de paume du talon de paume après la réception du signal de toucher ;
un module de détection de relation (510) configuré pour détecter que les relations de position naturelle et les relations de position limite ont été mémorisées ou non, en fonction de l'empreinte de paume du talon de paume obtenue par le module d'obtention d'empreinte de paume ; et
un module d'obtention de relations configuré, quand un résultat de détection du module de détection de relations est que les relations de position naturelle et les relations de position limite ne sont pas mémorisées, pour obtenir les relations de position naturelle et les relations de position limite ;
dans lequel le module d'obtention de relations comprend :
une première unité d'obtention de relations (521) configurée pour recevoir un premier signal de toucher agissant sur une première interface, la première interface étant configurée pour inviter un utilisateur à toucher l'écran tactile avec la paume cible dans un état naturel et confortable ; obtenir une empreinte de paume du talon de paume à partir du premier signal de toucher de manière à marquer le talon de paume ; déterminer, en fonction du premier signal de toucher, des relations de position relative entre le talon de paume et divers doigts quand la paume cible touche l'écran tactile dans l'état naturel et confortable de manière à marquer le talon de paume ; et traiter les relations de position relative déterminées en fonction du premier signal de toucher en tant que relations de position naturelle ; et
une seconde unité d'obtention de relations (522) configurée pour recevoir un second signal de toucher agissant sur une seconde interface, la seconde interface étant configurée pour inviter l'utilisateur à toucher l'écran tactile avec la paume cible dans un état complètement étiré ; obtenir une empreinte de paume du talon de paume à partir du second signal de toucher de manière à marquer le talon de paume ; déterminer, en fonction du second signal de toucher, des relations de position relative entre le talon de paume et divers doigts quand la paume cible touche l'écran tactile dans l'état complètement étiré ; et traiter les relations de position relative déterminées en fonction du second signal de toucher en tant que relations de position limite.

5. Appareil électronique selon la revendication 4, dans lequel le module de détermination de position initiale comprend :
une première unité de détermination de position (461) ;
la première unité de détermination de position étant configurée, quand une empreinte de paume est utilisée pour marquer le talon de paume et des empreintes digitales sont utilisées pour marquer divers doigts dans les relations de position naturelle, pour obtenir une empreinte de paume du talon de paume en fonction du signal de toucher et déterminer une position de début de l'empreinte de paume sur l'écran tactile ; obtenir les relations de position naturelle correspondant à l'empreinte de paume ; et déterminer la position initiale de chaque doigt sur l'écran tactile en fonction de la position de début de l'empreinte de paume sur l'écran tactile et des relations de position naturelle .

6. Appareil électronique selon la revendication 5, dans lequel le module de détermination de position de touche comprend :
une unité d'obtention d'empreinte digitale (431) configurée pour obtenir une empreinte digitale du doigt cible après la réception du signal de clic ;
une unité d'interrogation de position initiale (432) configurée pour interroger la position initiale du doigt cible en fonction de l'empreinte digitale du doigt cible ;
une unité de calcul de déplacement (433) configurée pour calculer le déplacement entre la position initiale et la position de toucher du doigt cible ; et
une unité de détermination de position de touche (434) configurée pour déterminer la position de touche cible correspondant au doigt cible à la position de toucher, en fonction du déplacement, de la position de touche de base de la touche de base correspondant au doigt cible, et de la position relative sur l'écran tactile de la position de touche de base et d'autres positions de touches d'autres touches correspondant au doigt cible.

7. Programme informatique qui, à son exécution sur un processeur d'un appareil selon l'une quelconque des revendications 4 à 6, met en oeuvre un procédé selon l'une quelconque des revendications 1 à 3.
